# EUROPÄISCHE PATENTSCHRIFT

(11) **EP 0 490 280 B1**
(45) Veröffentlichungstag und Bekanntmachung des Hinweises auf die Patenterteilung: **27.04.1994**
(21) Anmeldenummer: 91120934.4
(22) Anmeldetag: 06.12.1991
(51) Int. Cl.: F16L 23/00, F24F 13/02

(54) **Flanschverbindung für Klimatisierungskanäle**
Flanged joint for air-conditioning channels
Joint à brides pour canaux de conditionnement d'air

(30) Priorität: 10.12.1990 DE 4039346
(43) Veröffentlichungstag der Anmeldung: 17.06.1992
(73) Patentinhaber: Mez, Georg, D-72770 Reutlingen (DE)
(72) Erfinder: Mez, Georg, D-72770 Reutlingen (DE)
(74) Vertreter: Kinkelin, Ulrich, Dipl.-Ing.

(56) Entgegenhaltungen:
- DE-A- 2 501 611
- DE-A- 3 509 080
- FR-A- 2 257 058

## Beschreibung

Die Erfindung bezieht sich auf eine Flanschverbindung gemäß dem Oberbegriff des Anspruchs 1.

Aus der DE-A-3 509 080 ist eine Flanschverbindung bekannt, wobei die Rahmenschenkel mit zwei im Abstand parallel zueinander angeordneten Radialstegen nach Art eines Hohlprofils gestaltet sind, in das die Schenkel der Eckwinkel eingeschoben werden. Die Schenkel werden dabei ausschließlich an ihren Umfangsflächen von dem sie einschließenden Hohlprofil gehalten. Da aber dieses Hohlprofil seine endgültige Form erst erhält, wenn die Rahmenschenkel an den Wänden eines Kanals befestigt sind, hierbei aber Material und Befestigungstoleranzen auftreten, variiert die Kraft, mit der die Schenkel der Eckwinkel im Hohlprofil fixiert werden in weiten Grenzen.

Um die Schenkel der Eckwinkel besser im Hohlprofil zu fixieren hat man sie gemäß FR-A-2 257 058 oder DE-Gm 7 401 814 mit Löchern versehen, in die napfartige Einprägungen der äußeren Radialstege der Rahmenschenkel hineingedrückt werden. Diese nach dem Zusammenstecken zu erstellenden Einprägungen müssen mit einer spezielle Positionieranschläge aufweisenden Prägeeinrichtung hergestellt werden, weil die Löcher durch die Radialstege der Rahmenschenkel abgedeckt werden und nicht sichtbar sind.

Aus der DE-A-2 501 611 ist eine gattungsgemäße Flanschverbindung bekannt, wofür charakteristisch ist, daß die Schenkel der Eckwinkel geschlitzt sind und den Wulst jeweils klemmend übergreifen. Diese Klemmzone verändert sich nicht mit dem Anbringen der Rahmenschenkel an den Kanalwänden, doch hat man ursprünglich diese Ausbildung allein aus Gründen einer Materialeinsparung geschaffen, weil der Wulst im Querschnitt wie ein Druckknopf gestaltet, auch die seitliche Fixierung der Eckwinkel übernehmen sollte und dafür ein äußerer Radialsteg der Rahmenschenkel entbehrlich schien. Da der Wulst die Führungsaufgabe seitheriger Hohlprofile übernehmen soll, ist eine Federwirkung bei dieser Konzeption unerwünscht, was heißt, daß der Wulst mit eng aneinanderliegenden Wulstwänden geformt werden muß, was sehr stark belastete Formwerkzeuge zur Folge hat. Auch muß die Wulsthöhe mit großer Präzision eingehalten werden. Das Fehlen einer Federwirkung wird ausgeglichen indem Teilbereiche des Wulstes in eine Erweiterungsstelle des Längsschlitzes jedes Eckwinkel-Schenkels hineingedrückt werden. Da hierbei der verbreiterte Wulstkopf die Erweiterungsstelle überdeckt, ist ebenfalls eine speziell eingerichtete Prägeeinrichtung erforderlich.

Aufgabe der Erfindung ist es, eine Flanschverbindung der gattungsgemäßen Art zu schaffen, die es ermöglicht, die Eckwinkel an den Rahmenschenkeln unverlierbar zu verankern und zwar ohne zusätzliche Maschinen, lediglich mit Hilfe eines Hammers. Auch ungelernte Personen müssen in der Lage sein, die Verbindung so herzustellen, wie sie der Konstrukteur vorgesehen hat.

Diese Aufgabe wird gelöst durch die kennzeichnenden Merkmale des Anspruchs 1.

Die Rahmenschenkel übernehmen die Seitenführung und der Wulst dient jetzt nur zur unverlierbaren Fixierung der Eckwinkel. Dabei haben jetzt die Wulstwände einen Abstand zueinander, was das Formwerkzeug schont. Die Deformation der Randbereiche des Wulsts im Deformationsraum erfolgt jeweils zwangsläufig mit dem Eintreiben des Eckwinkels in das Hohlprofil der Rahmenschenkel, zu welchem Eintreiben ein einfacher Hammer genügt. Eine Sichtkontrolle des Deformationsbereichs ist daher nicht erforderlich.

Weitere vorteilhafte Ausgestaltungen und Weiterbildungen der Erfindung ergeben sich aus der nachfolgenden Beschreibung eines in der Zeichnung dargestellten Ausführungsbeispiels sowie aus den Unteransprüchen.

Es zeigt:
- Fig. 1: eine perspektivische Ansicht eines Rahmenschenkels eines ersten Ausführungsbeispiels der Erfindung im Maßstab 2:1,
- Fig. 2: eine der Fig.1 entsprechende Darstellung eines zweiten Ausführungsbeispiels,
- Fig. 3: einen Querschnitt zum Ausführungsbeispiel nach Fig.1 mit in einen Hohlraum eingestecktem Eckwinkel-Schenkel,
- Fig. 4: die Draufsicht auf einen Eckwinkel im Maßstab 1:1,
- Fig. 5: einen Schnitt längs der Linie 5-5 in Fig. 4,
- Fig. 6: eine abgebrochene Ansicht ähnlich Fig. 4, jedoch nur mit einem einzigen Schenkel,
- Fig. 7: eine Ansicht gemäß dem Pfeil 7 in Fig. 6,
- Fig. 8: eine wesentlich vergrößerte Ansicht des Deformationsraums mit deformierten Wulsträndern,
- Fig. 9: eine Ansicht wie Fig. 8, jedoch mit einem anderen Deformationsraum,
- Fig. 10: einen Schnitt, der eine dritte Wulstausbildung zeigt,
- Fig. 11: eine systematische Darstellung von Kräften, wobei die Schenkel noch nicht ganz eingesteckt sind.

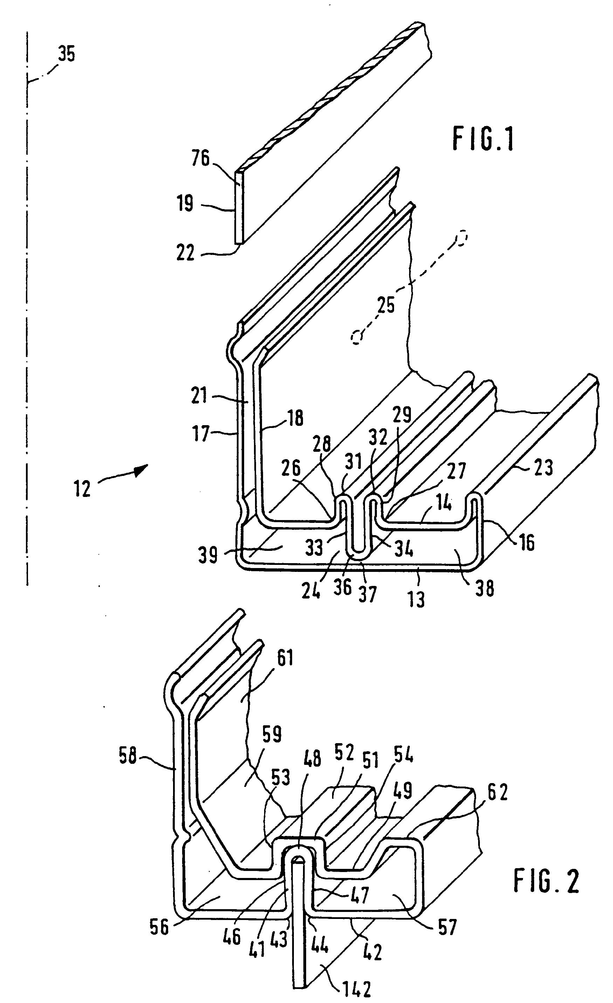

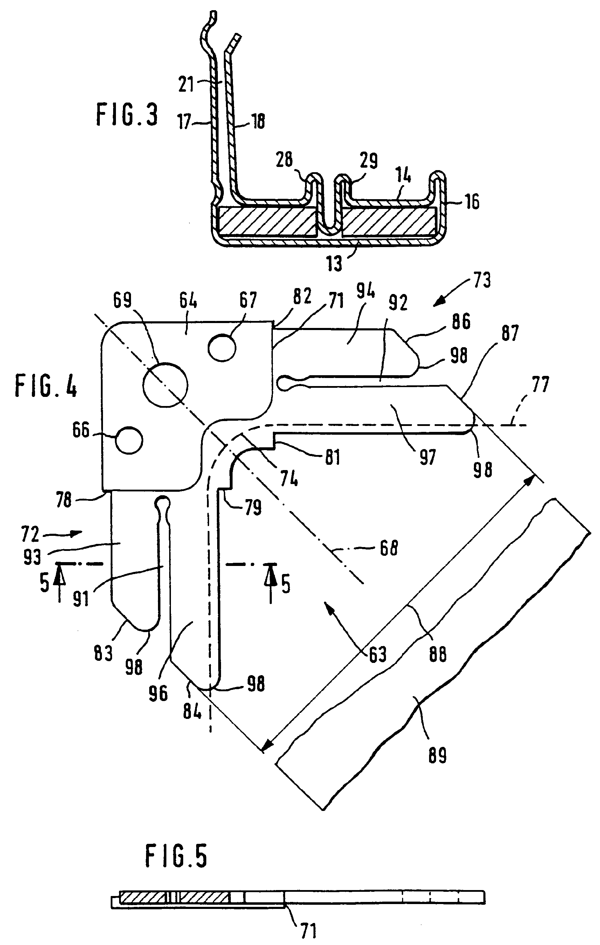

Gemäß Fig. 1 hat ein Rahmenschenkel 12 einen inneren Radialsteg 13, einen äußeren Radialsteg 14, einen Außensteg 16, einen inneren Längssteg 17 und einen äußeren Längssteg 18. Eine Kanalwand 19 kann in den Wandspalt 21 eingeschoben werden. Dabei sitzt ihre Stirnfläche 22 entweder ganz links auf dem Radialsteg 13 oder aber bei gemäß Fig. 3 breiten Schenkeln auf diesen auf. In bekannter Technik wird die Kanalwand 19 nach Aufschieben eines aus Eckwinkeln und Rahmenschenkeln gebildeten Rahmens durch Punktschweißpunkte 25 mit 17 und 18 verschweißt, so daß dieser Bereich für die vorliegenden Zwecke starr ist.

Der Radialsteg 13 ist nach unten zu eben. Dorthin würde sich bei vorhandenem nächstem Kanalschuß die nachste Flanschverbindung anlegen. Im fertig montierten Zustand ist also der Radialsteg 13 innen.

Der Außensteg 16 geht mit einer U-Abbiegung 23 in den Radialsteg 14 in der gezeichneten Weise über. Etwa in der Mitte des Radialstegs 14 befindet sich ein Wulst 24. Man sieht zwei im Winkel von etwa 90° nach außen hin im Abstand voneinander angeordnete erste Abbiegungen 26, 27. Diese gehen über kurze Wandstreifen 28, 29 in zwei zweite Abbiegungen 31, 32 über. Daraufhin folgen einander gegenüberliegende Wulstwände 33, 34, die von den Wandstreifen 28, 29 einen Abstand haben und senkrecht zum Radialsteg 13 stehen, der seinerseits senkrecht zur geometrischen Kanalmittenachse 35 steht. Die Wulstwände 33, 34 gehen in eine dritte Abbiegung 36 über, die von der Innenfläche des Radialstegs 13 einen minimalen Abstand 37 hat. In einem anderen, nicht dargestellten Ausführungsbeispiel kann der Abstand 37 auch Null sein. Die Radialstege 13, 14 sind eben. Zwischen 34, 13, 16 und 14 befindet sich eine erste Hohlraumhälfte 38 und zwischen 33, 14, dem unteren Teil von 17 und 13 befindet sich eine zweite Hohlraumhälfte 39. Das verwendete Blechmaterial ist 0,7 mm dick und damit bei gleicher Steifigkeit ein Zehntel bis zwei Zehntel Millimeter dünner als dies bei Rahmenschenkeln gleicher Fähigkeit bislang der Fall war. Selbst geringe Materialeinsparungen machen bei den Rahmenschenkeln 12 sehr viel aus, weil es sich hier um Massenware handelt.

Beim Ausführungsbeispiel von Fig. 2 ist der Wulst 41 aus dem inneren Radialsteg 42 herausgebogen und zwar auch etwa in dessen Mitte. Man hat hier im Abstand voneinander zwei 90° Abwinklungen 43, 44, die in Wulstwände 46, 47 übergehen, die senkrecht zu 42 stehen. Ihr innerer Abstand kann der 2:1 Zeichnung entnommen werden, wie auch Fig. 1 Abmessungen entnommen werden können. Die Wulstwände 46, 47 gehen in eine U-Abbiegung 48 über. Wie man sieht, reicht die Wulstwand 46, 47 über die Ebene des äußeren Radialstegs 49 hinaus und ist insoweit in einer U-Rinne 51 mit seitlichem Abstand eingelassen, die nach außen aus dem äußeren Radialsteg 49 herausgebogen ist. Die U-Abbiegung 48 berührt im Ausführungsbeispiel den Boden 52 der U-Rinne 51 auf dessen Innenseite, hat jedoch von den Innenflächen der Seitenwände 53, 54 einen Abstand. Es entstehen wieder zwei Hohlraumhälften 56, 57. Der äußere Radialsteg 49 reicht nicht so weit zum inneren Längssteg 58 wie beim ersten Ausführungsbeispiel. Vielmehr geht von dort aus eine Schräge 59 zum äußeren Längssteg 61 ab, der deshalb kürzer ist, aber immer noch Platz für Punktschweißpunkte hat. Entsprechend der U-Abbiegung 23 hat man auch hier eine U-Abbiegung 62, die jedoch nicht so direkt auf sich selbst zurückgebogen ist, sondern ein breiteres Profil hat.

Gemäß Fig. 4 und 5 hat ein Eckwinkel 63 aus 3 mm Stahl gestanzt und geprägt eine Mittelplatte 64. Diese hat zwei Zentrierlöcher 66, 67 symmetrisch zur Winkelhalbierenden 68 und ein Befestigungsloch 69 mit dem Mittelpunkt in der Winkelhalbierenden. Gemäß einer Grenzlinie 71 ist die Mittelplatte 64 gemäß Fig. 5 nach unten herausgeprägt und zwar so viel, als ein Radialsteg dick ist. An die Mittelplatte anschließende Schenkel 72, 73 bleiben in der ursprünglichen Ebene, ebenso wie ein überbrückender Bereich 74, so daß die Endfläche 76 der Kanalwand 19 gemäß der Spur 77 durchgehend eben aufliegen kann. Am inneren Ende der Schenkel 72, 73 sind Anschlagecken 78, 79, 81, 82 vorgesehen, an denen bei ganz eingeschlagenen Eckwinkeln 63 die Endfläche des Außenstegs 16 und des inneren Längsstegs 17 anschlägt.

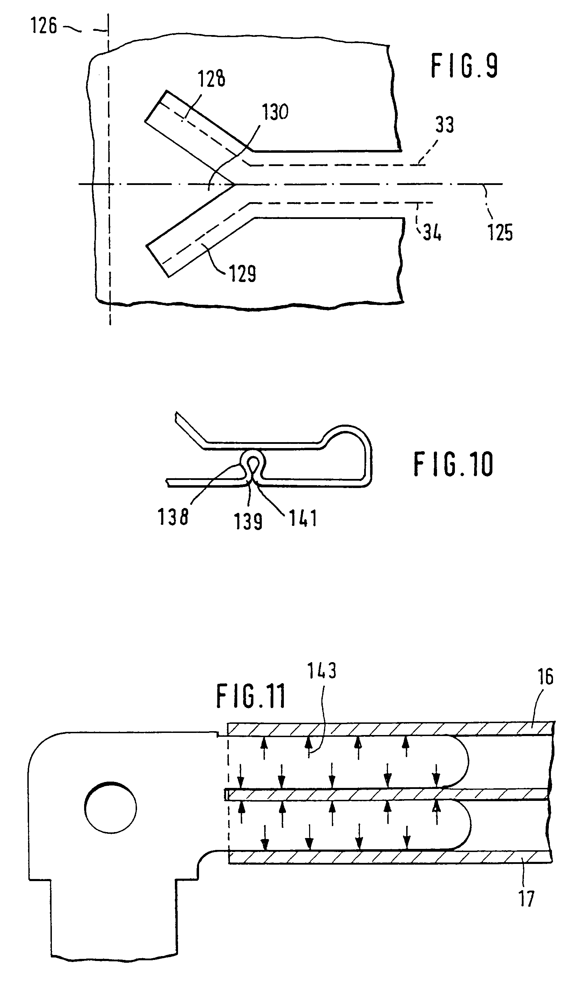

Die Außenflächen 83, 84, 86, 87 der Schenkel 72, 73 verlaufen parallel zur geometrischen Winkelhalbierenden 68 und sind zugleich die Außenflächen eines Bandmaterials 89 der Breite 88, so daß der Abfall bei der Herstellung des Eckwinkels 63 minimiert wird. Das Bandmaterial 89 ist angedeutet. In der Mitte der Schenkel 72, 73 befindet sich jeweils ein Längsschlitz 91, 92, der unter 45° zu 68 verläuft. Wegen des Schnitts gemäß 83, 84, 86, 87 entstehen kürzere Schenkelhälften 93, 94 und längere Schenkelhälften 96, 97 Der leichteren Einführbarkeit dienen im Radius gleiche Drittelskreis-Rundungen 98. Die Längsschlitze 91, 92 sind senkrecht zur Zeichnungsebene von Fig. 4 gestanzt und haben ebenso senkrecht liegende Innenflächen. Es wird anhand von Fig. 8 der innere Bereich des Längsschlitzes 92 beschrieben. Der Längsschlitz 91 ist sinngemäß gleich gestaltet.

Gemäß Fig. 8 liegen die Wulstwände 33, 34 mit Druck an Innenflächen 99, 111 des Längsschlitzes 92 an und zwar von ganz außen bis zu Verengungen 112, 113. Diese haben Aufgleitflanken 114, 116, die sanft nach innen zu gehen und nach einem Punkt 117, 118 größter Enge wieder mit Flanken 119, 121 nach außen schwingen, die bereits Teil eines Deförmationsraums 122 sind. Der Deformationsraum 122 ist kreisrund in dieser Ansicht und liegt - wie die vorher besprochenen Flächen - symmetrisch zu einer geometrischen Mittenebene 125, die senkrecht zur Zeichnungsebene von Fig. 8 steht. Der Deformationsraum 122 ist genauso breit wie der Längsschlitz 92 und bildet dessen direkte, nur von den Verengungen 112, 113 unterbrochene Fortsetzung. Durch Hammerschläge von links auf die linke Stirnfläche der Mittelplatte 64 ist der Endbereich der Wulstwände 33, 34 hineindeformiert worden, wobei die Lage dort zufällig ist. Die in Fig. 8 obere Wulstwand 33 hat sich auf einem etwa 3 mm lang und damit im Verhältnis zur Dicke der Wulstwände steifen Bereich durch einen nach außen gerichteten Knick 123 deformiert. Die Wulstwand 34 hat sich im Bereich 124 ein wenig in den Rand des Deformationsraums 122 eingeschnitten und ist bei 124 auch ausgeknickt, allerdings nach oben hin. Wie weit in den Deformationsraum 122 hineindeformiert wird, bestimmen die Anschlagecken 81, 82, deren Verbindungslinie 126 in Fig. 8 gezeichnet ist. Bei diesem bevorzugten Ausführungsbeispiel liegt die Mittelplatte 64 in gleicher Ebene wie der Schenkel 73 (oder auch 72), was den Vorteil hat, daß der Schenkel 73 ohne die schwächende Grenzlinie 71 besser mit der Mittelplatte 64 verbunden ist. Schlägt der Rahmenschenkel 12 an den Anschlagecken 82, 81 an, dann ist man sicher, daß genügend Deformationsarbeit im Deformationsraum 122 geleistet wurde, ohne daß man dies von außen sieht. Deshalb ist der 9.00 Uhr Punkt 127 des Deformationsraums 122 etwas von der Verbindungslinie 126 entfernt. Dieses Maß gibt an, wie weit im Innern deformiert wird.

Es kann aber auch nur eine einzige Verengung 112 vorgesehen sein.

Gemäß Fig. 9 kann die Verengung auch ganz fehlen. Der Deformationsraum wird dann durch zwei Verzweigungen 128, 129 gebildet, die sich unter etwa 45° von der Mittenebene 125 wegspreizen, so daß zwischen ihnen eine Pflugspitze 130 entsteht, die die Wulstwände 33, 34 in ihrem Bereich auseinanderspreizt.

Den bevorzugten Ausführungsbeispielen ist gemeinsam, daß 33 und 34 zwar unter Druck, aber ohne bleibende Deformation, zumindest ohne wesentliche bleibende Deformation an den Innenflächen 99, 111 anliegen und die bleibende Deformation erst durch die Verengungen 112, 113 oder dergleichen geschieht, ebenso wie im Deformationsraum 122.

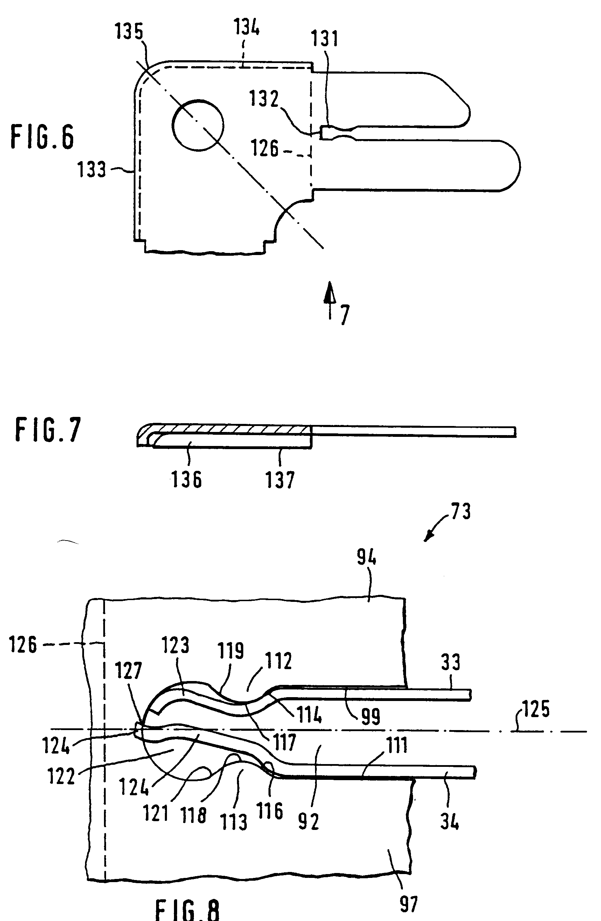

Gemäß Fig. 6 hat man bei den insoweit gleichen Verengungen eine leichte Klemmung von 33, 34 (wie dies auch beim Ausführungsbeispiel von Fig. 8 der Fall ist). Der Deformationsraum 131 hat jedoch hier die Gestalt einer nach rechts offenen Flasche mit einem senkrecht zu 125 stehenden Flaschenboden 132. Es ist also nicht notwendig, daß der Deformationsraum kreisrund ist. Auch hier hört der Flaschenboden 132 vor der Verbindungslinie 126 in genügendem Abstand auf. Der Schenkel geht eben in die Mittelplatte über. Dafür ist der Außenrand 133, 134 auch über das Außeneck 135 hinweg als Biegung 136 gemäß Fig. 6 nach hinten und gemäß Fig. 7 nach unten abgebogen und zwar so viel als die Blechdicke der Rahmenschenkel beträgt.

Man erhält so eine Auflagefläche 137 genügender Fläche zum nächsten, benachbarten Eckwinkel hin.

Gemäß Fig. 10 ist ein Wulst 138 im Querschnitt wie eine Öse nach innen abgebogen. Im rohrförmigen Bereich des Wulstes 138 sind die nunmehr kreisrund verlaufenden Wände trotzdem noch im gegenseitigen Abstand, während die Knie 139, 141 der Öse sich berühren. Weil die Knie geschlossen sind, kann man in diesen Wulst 138 keinen sich über die Länge des Rahmenschenkels erstreckenden Verbindungsstreifen zum nächsten Rahmenschenkel hin einlegen. Gemäß Fig. 2 könnte man jedoch bei dieser Konstruktion, weil sie zum nächsten Rahmenschenkel hin offen ist, einen Verbindungsstreifen 142 von maximal 1,6 mm Dicke einlegen, der dann in die komplimentäre Öffnung des benachbarten Wulstes reicht, so daß man bei insbesondere langen Rahmenschenkeln eine Ausrichtung und gegebenenfalls auch zusätzliche Dichtung erreichen kann.

Es wurde in Fig. 11 der Deformationsraum der Einfachheit halber weggelassen und auch der Wulst nicht doppelwandig gezeichnet. Da der Wulst Übermaß im Verhältnis zum Längsschlitz hat, stützt sich der Schenkel oben am Außensteg 16 und unten am Längssteg 17 ab, so daß steifigkeitsmäßig betrachtet, der Längsschlitz keine Schwächung bedeutet. Die Pfeile 143 sind symbolische Kraftpfeile. Gleiches würde auch gelten, wenn sich der untere Schenkel nicht direkt auf 17, sondern auf eine Kanalwand 19 abstützen würde, die bis zum inneren Radialsteg vorgeschoben ist.

Der Eckwinkel braucht nicht platt eben zu sein, sondern kann auch konkav gekrümmt sein. Falls man will, kann man in die Deformationsräume hinein auch noch von außen den Radialsteg 14 in altbekannter Weise hineindeformieren.

## Patentansprüche

1. Flanschverbindung für rechteckige, vier Wände aufweisende Klimatisierungskanäle,
mit einem Eckwinkel (63) aus Stahl, von dessen Mittelplatte (64) zwei Schenkel (72, 73) ausgehen, die in sich je einen Längsschlitz (91, 92) aufweisen, der senkrecht zur Schenkelebene steht,
mit Rahmenschenkeln (12), die einen Radialsteg (14), einen Außensteg (16), einen Längssteg (18) und einen Wulst (24) aufweisen, welcher Wulst mit zumindest drei Abbiegungen aus dem Radialsteg (14) herausgebogen ist und wobei der jeweilige Schenkel (72, 73) des Eckwinkels (63) im wesentlichen parallel zum Radialsteg (14) verläuft, mindestens mit einem Teil seiner Fläche an diesem anliegt und sein Längsschlitz (91, 92) im Überdeckungsbereich den Wulst (24) aufnimmt,
sowie mit einem Bereich (122) bleibender Deformation zwischen Wulst (24) und Längsschlitz (91, 92),
gekennzeichnet durch folgende Merkmale:
a) die Rahmenschenkel (12) haben zwei Radialstege, nämlich einen inneren Radialsteg (13) und einen äußeren Radialsteg (14), die in wesentlichen Bereichen parallel zueinander angeordnet sind und durch den Außensteg (16) miteinander verbunden sind;
b) die Rahmenschenkel (12) haben zwei Längsstege, nämlich einen inneren Längssteg (17) und einen äußeren Längssteg (18), die zwischen sich die Wände (19) aufnehmen;
c) zwischen Außensteg (16), den beiden Radialstegen (13, 14) und innerem Längssteg (17) befindet sich ein Hohlraum (38, 39), in den hinein der Wulst gebogen ist;
d) in den Hohlraum (38, 39) sind die Schenkel (72, 73) des Eckwinkels (63) bis zum Anschlag einschiebbar;
e) im inneren Endbereich der Längsschlitze (91, 92) ist je eine Verengung (112, 113) vorgesehen, deren lichte Weite kleiner ist als das Außenmaß des Wulstes (24);
f) hinter der Verengung (112, 113) kommt ein Deformationsraum (122), in dem die äußersten Randbereiche des Wulsts (24) bleiben und spiellos zu einer Form deformiert werden, deren Querabmessung größer ist als die lichte Weite der Verengung (112, 113);
g) die einander gegenüberliegenden Wulstwände (33, 34) des Wulstes (24) haben voneinander einen Abstand, der ein Eindringen ihrer Randbereiche in den Deformationsraum (122) erlaubt.

2. Flanschverbindung nach Anspruch 1, dadurch gekennzeichnet, daß die Verengung (112, 113) von beiden Innenflächen (99, 111) des Längsschlitzes (92) ausgeht.

3. Flanschverbindung nach Anspruch 1, dadurch gekennzeichnet, daß die Verengung (112, 113) symmetrisch zur Mittenebene (125) des Längsschlitzes (92) ist.

4. Flanschverbindung nach Anspruch 1, dadurch gekennzeichnet, daß die Verengung (112, 113) von ihrem Eingang her gesehen mindestens eine stetige Aufgleitflanke (114, 116) hat.

5. Flanschverbindung nach Anspruch 1, dadurch gekennzeichnet, daß die lichte Weite der Verengung (112, 113) 2/3 ± 20% des Abstands der Wulstwände (33, 34) beträgt.

6. Flanschverbindung nach Anspruch 1, dadurch gekennzeichnet, daß die lichte Weite der Verengung (112, 113) bei 2 mm, der Abstand der Wulstwände (33, 34) des Wulstes (24) bei 3 mm bei einer Blechdicke des Rahmenschenkels (12) von 1 mm liegt.

7. Flanschverbindung nach Anspruch 1, dadurch gekennzeichnet, daß der Deformationsraum (122) etwa so breit ist, wie der Längsschlitz (91, 92).

8. Flanschverbindung nach Anspruch 1 oder 7, dadurch gekennzeichnet, daß der Deformationsraum (122) etwa birnenförmig ist.

9. Flanschverbindung nach Anspruch 8, dadurch gekennzeichnet, daß der Deformationsraum (122) zumindest über die inneren 180° hinweg kreisförmig ist.

10. Flanschverbindung nach Anspruch 1, dadurch gekennzeichnet, daß von der Verbindungslinie (126) zweier Anschlagecken (81, 82) der zu dieser Verbindungslinie nächste Bereich des Deformationsraumes (122) einen Abstand hat.

11. Flanschverbindung nach Anspruch 10, dadurch gekennzeichnet, daß der Abstand mindestens 1 mm ist.

12. Flanschverbindung nach Anspruch 11, dadurch gekennzeichnet, daß der Abstand im Bereich von 1 bis 4 mm ist.

13. Flanschverbindung nach Anspruch 10, dadurch gekennzeichnet, daß der Abstand mindestens einer Blechdicke entspricht.

14. Flanschverbindung nach Anspruch 1, dadurch gekennzeichnet, daß der Deformationsraum eine V-förmige Endverzweigung (128, 129) des Längsschlitzes ist, die zwischen sich eine Pflugspitze (130) definiert.

15. Flanschverbindung nach Anspruch 14, dadurch gekennzeichnet, daß die Endverzweigungs-Äste (128, 129) schmäler sind, als der Längsschlitz.

16. Flanschverbindung nach Anspruch 1, dadurch gekennzeichnet, daß die Enden der Schenkel (72, 73) des Eckwinkels (63) etwa parallel zur Winkelhalbierenden (68) des Eckwinkels abgeschnitten sind.

17. Flanschverbindung nach Anspruch 1, dadurch gekennzeichnet, daß die Mittelplatte eben in die Schenkel des Eckwinkels übergeht.

18. Flanschverbindung nach Anspruch 1, dadurch gekennzeichnet, daß die Mittelplatte im Außeneckbereich (135) mit einem schmalen Steg (136) aus der Ebene der Mittelplatte herausgebogen ist.

19. Flanschverbindung nach Anspruch 18, dadurch gekennzeichnet, daß der Steg (136) sich an den Außenrändern (133, 134) der Mittelplatte bis zum Ansatz der Schenkel fortsetzt.

20. Flanschverbindung nach Anspruch 1, dadurch gekennzeichnet, daß in den Schenkeln (72, 73) des Eckwinkels (63) zumindest im Bereich der Verengung keine Löcher vorgesehen sind.

21. Flanschverbindung nach Anspruch 1, dadurch gekennzeichnet, daß beide Schenkel (72, 73) des Eckwinkels (63) gleich breit sind.

22. Flanschverbindung nach Anspruch 1, dadurch gekennzeichnet, daß der Wulst (24) vom äußeren Radialsteg (14) aus abgebogen ist.

23. Flanschverbindung nach Anspruch 22, dadurch gekennzeichnet, daß aus dem äußeren Radialsteg (14) nach außen hin im Abstand voneinander zwei erste Abbiegungen (26, 27) vorgesehen sind, gefolgt von zwei zweiten Abbiegungen (31, 32), die den Wulst (24) in den Hohlraum (38, 39) hineinlenken, dabei an den ersten Abbiegungen (26, 27) vorbei die Wulstwände (33, 34) bildend, und daß der Wulst vor dem inneren Radialsteg (13) eine dritte Abbiegung (36) in der Art eines U-turns hat.

24. Flanschverbindung nach Anspruch 23, dadurch gekennzeichnet, daß die ersten Abbieggungen (26, 27) über kurze Wandstreifen (28, 29) in die zweiten Abbiegungen (31, 32) übergehen.

25. Flanschverbindung nach Anspruch 23, dadurch gekennzeichnet, daß zwischen den Wandstreifen (28, 29) und den Wulstwänden (33, 34) ein Abstand ist.

26. Flanschverbindung nach Anspruch 23, dadurch gekennzeichnet, daß die ersten Abbiegungen (26, 27) über etwa 90°, die zweiten Abbiegungen (31, 32) und die dritte Abbiegung (36) über etwa 180° reichen.

27. Flanschverbindung nach einem der Ansprüche 23 bis 26, dadurch gekennzeichnet, daß alle Abbiegungen (26, 27, 31, 32, 36) möglichst rund sind.

28. Flanschverbindung nach Anspruch 1, dadurch gekennzeichnet, daß der Wulst (41) vom inneren Radialsteg (42) aus abgebogen ist.

29. Flanschverbindung nach Anspruch 28, dadurch gekennzeichnet, daß aus dem inneren Radialsteg (42) nach Innen hin im Abstand voneinander zwei vierte Abbiegungen (43, 44) vorgesehen sind, die den Wulst (41) in den Hohlraum (56, 57) hineinlenken und daß der Wulst im Bereich des äußeren Radialstegs (49) eine fünfte Abbiegung (48) in der Art eines U-turns hat.

30. Flanschverbindung nach Anspruch 29, dadurch gekennzeichnet, daß die fünfte Abbiegung (48) in eine nach außen geprägte Rinne (51) des äußeren Radialstegs (49) greift.

31. Flanschverbindung nach Anspruch 30, dadurch gekennzeichnet, daß die fünfte Abbiegung (48) die Seitenwände (53, 54) der Rinne (51) nicht berührt, bei zu großen seitlichen Auslenkungen sich aber an den Seitenwänden (53, 54) abstützt.

## Claims

1. Flange connection for rectangular four-walled air conditioning ducts, comprising a steel corner angle (63) from whose middle plate (64) two legs (72, 73) extend, each of which contains a longitudinal slot (91, 92) at right angles to the plane of the leg; also comprising frame legs (12) which comprise a radial web (14), an outside web (16), a longitudinal web (18) and a bead (24), the bead being bent out of the radial web (14) and consisting of at least three bends; and wherein each leg (72, 73) of the corner angle (63) extends substantially parallel to the radial web (14) and lies against the latter by at least part of its surface, and its longitudinal slot (91, 92) receives the bead (24) in the overlap region; and further comprising a region (122) of permanent deformation between bead (24) and longitudinal slot (91, 92), characterized by the following features:
a) the frame legs (12) have two radial webs, namely an inner (13) and an outer radial web (14), which in substantial regions are parallel to one another and which are joined together by the outside web (16);
b) the frame legs (12) have two longitudinal webs, namely an inner (17) and an outer web (18), which receive the walls (19) between them;
c) between the outside web (16), the two radial webs (13, 14) and the inner longitudinal web (17) a cavity (38, 39) is located into which the bead is bent;
d) the legs (72, 73) of the corner angle (63) can be inserted into the cavity (38, 39) until they encounter a stop;
e) in the inner end region of each longitudinal slot (91, 92) a constriction (112, 113) is provided, the inside width of which is smaller than the outside dimension of the bead (24);
f) behind the constriction (112, 113) a deformation space (122) is provided, in which the outermost edge regions of the bead (24) remain and, without play, are deformed to a shape whose transverse dimension is larger than the inside width of the constriction (112, 113);
g) the bead walls (33, 34) of the bead (24) lying opposite one another are spaced apart by a distance permitting penetration of their marginal regions into the deformation space (122).

2. Flange connection according to Claim 1, characterized in that the constriction (112, 113) starts from both inner surfaces (99, 111) of the longitudinal slot (92).

3. Flange connection according to Claim 1, characterized in that the constriction (112, 113) is symmetrical to the central plane (125) of the longitudinal slot (92).

4. Flange connection according to Claim 1, characterized in that the constriction (112, 113), viewed from its inlet, has at least one constant slide-on flank (114, 116).

5. Flange connection according to Claim 1, characterized in that the inside width of the constriction (112, 113) amounts to 2/3 ± 20% of the distance between the bead walls (33, 34).

6. Flange connection according to Claim 1, characterized in that the inside width of the constriction (112, 113) is 2 mm, the distance between the bead walls (33, 34) of the bead (24) is 3 mm, and the thickness of the sheet metal of the frame leg (12) 1 mm.

7. Flange connection according to Claim 1, characterized in that the deformation space (122) is approximately as wide as the longitudinal slot (91, 92).

8. Flange connection according to Claim 1 or 7, characterized in that the deformation space (122) is approximately pear-shaped.

9. Flange connection according to Claim 8, characterized in that the deformation space (122) is circular at least over the inner 180°.

10. Flange connection according to Claim 1, characterized in that the nearest region of the deformation space (122) to the line (126) connecting two stop corners (81, 82) is at a distance from said connecting line.

11. Flange connection according to Claim 10, characterized in that the distance is at least 1 mm.

12. Flange connection according to Claim 11, characterized in that the distance is in the range of 1-4 mm.

13. Flange connection according to Claim 10, characterized in that the distance amounts to at least one sheet metal thickness.

14. Flange connection according to Claim 1, characterized in that the deformation space is a V-shaped end-branching (128, 129) of the longitudinal slot, the branches forming between them the shape of a plough tip (130).

15. Flange connection according to Claim 14, characterized in that the branches (128, 129) of the end branching are narrower than the longitudinal slot.

16. Flange connection according to Claim 1, characterized in that the ends of the legs (72, 73) of the corner angle (63) are cut off approximately parallel to the angle bisector (68) of the corner angle.

17. Flange connection according to Claim 1, characterized in that the middle plate merges as a plane surface into the legs of the corner angle.

18. Flange connection according to Claim 1, characterized in that in the outside corner region (135) the middle plate has a narrow web (136) bent out of its plane.

19. Flange connection according to Claim 18, characterized in that the web (136) is extended at the outside edges (133, 134) of the middle plate as far as the connection of the legs.

20. Flange connection according to Claim 1, characterized in that no holes are provided in the legs (72, 73) of the corner angle (63), at least in the region of the constriction.

21. Flange connection according to Claim 1, characterized in that the two legs (72, 73) of the corner angle (63) have the same width.

22. Flange connection according to Claim 1, characterized in that the bead (24) is bent out of the outer radial web (14).

23. Flange connection according to Claim 22, characterized in that two first bends (26, 27), spaced apart, are provided in the outward direction from the outer radial web (14), that these are followed by two second bends (31, 32) which guide the bead (24) into the cavity (38, 39), forming the bead walls (33, 34) past the first bends (26, 27), and that before reaching the inner radial web (13) the bead has a third bend (36) in the form of a U-turn.

24. Flange connection according to Claim 23, characterized in that the first bends (26, 27) merge via short wall strips (28, 29) into the second bends (31, 32).

25. Flange connection according to Claim 23, characterized in that a space is left between the wall strips (28, 29) and the bead walls (33, 34).

26. Flange connection according to Claim 23, characterized in that the first bends (26, 27) extend over about 90° and the second bends (31, 32) and the third bend (36) over about 180°.

27. Flange connection according to one of Claims 23 to 26, characterized in that all the bends (26, 27, 31, 32, 36) are as round as possible.

28. Flange connection according to Claim 1, characterized in that the bead (41) is bent out of the inner radial web (42).

29. Flange connection according to Claim 28, characterized in that two fourth bends (43, 44), spaced apart from one another, are provided in the inward direction from the inner radial web (42), said bends guiding the bead (41) into the cavity (56, 57), and that in the region of the outer radial web (49) the bead has a fifth bend (48) in the form of a U-turn.

30. Flange connection according to Claim 29, characterized in that the fifth bend (48) engages in an outwardly stamped channel (51) in the outer radial web (49).

31. Flange connection according to Claim 30, characterized in that the fifth bend (48) is not in contact with the side walls (53, 54) of the channel (51), but is supported against the side walls (53, 54) in the case of excessive lateral deflections.

## Revendications

1. Joint à brides pour canaux de climatisation rectangulaires présentant quatre parois,
avec une cornière d'angle (63) en acier, de la plaque du milieu (64) de laquelle partent deux côtés (72, 73) qui présentent en eux une fente longitudinale (91, 92) perpendiculaire au plan des cotés,
avec des côtés de cadre (12), qui présentent une bordure radiale (14), une bordure externe (16), une bordure longitudinale (18) et un bourrelet (24), lequel bourrelet est plié avec au moins trois courbures depuis la bordure radiale (14) et chaque côté (72, 73) de la cornière d'angle (63) s'étendant sensiblement parallèlement à la bordure radiale (14), au moins avec une partie de sa surface étant accolée à celle-ci et sa fente longitudinale (91, 92) recevant le bourrelet (24) dans la zone de recouvrement,
et avec une déformation restante (122) entre le bourrelet (24) et la fente longitudinale (91, 92),
caractérisé par les caractéristiques suivantes :
a) les côtés de cadre (12) ont deux bordures radiales, à savoir une bordure radiale interne (13) et une bordure radiale externe (14) qui, dans des zones essentielles, sont disposées parallèlement entre elles et qui sont reliées entre elles par la bordure externe (16) ;
b) les côtés de cadre (12) ont deux bordures longitudinales, à savoir une bordure longitudinale interne (17) et une bordure longitudinale externe (18) qui reçoivent entre elles les parois (19) ;
c) entre la bordure externe (16), les deux bordures radiales (13, 14) et la bordure longitudinale interne (17) il y a une cavité (38, 39) dans laquelle le bourrelet est coudé ;
d) dans la cavité (38, 39) les côtés (72, 73) de la cornière d'angle (63) sont insérables jusqu'à la butée ;
e) dans la zone d'extrémité interne des fentes longitudinales (91, 92). il est prévu un rétrécissement (112, 113) dont la largeur est inférieure à la mesure extérieure du bourrelet (24) ;
f) derrière le rétrécissement (112, 113) suit un espace de déformation (122) dans lequel restent les zones de bord les plus à l'extérieur du bourrelet (24) et prennent une forme sans jeu dont la dimension transversale est supérieure à la largeur du rétrécissement (112, 113) ;
g) les parois opposées (33, 34) du bourrelet (24) sont à une distance l'une de l'autre qui permet une pénétration de leur zone marginale dans l'espace de déformation (122).

2. Joint à brides selon la revendication 1, caractérisé en ce que le rétrécissement (112,113) part des deux surfaces internes (99, 111) de la fente longitudinale (92).

3. Joint à brides selon la revendication 1, caractérisé en ce que le rétrécissement (112,113) est symétrique au plan médian (125) de la fente longitudinale (92).

4. Joint à brides selon la revendication 1, caractérisé en ce que le rétrécissement (112,113), vu de son entrée, présente au moins un flanc de glissement constant (114, 116).

5. Joint à brides selon la revendication 1, caractérisé en ce que la largeur du rétrécissement (112, 113) représente 2/3 ± 20 % de la distance entre les parois de bourrelet (33, 34).

6. Joint à brides selon la revendication 1, caractérisé en ce que la largeur du rétrécissement (112, 113) est de l'ordre de 2 mm, la distance entre les parois (33, 34) du bourrelet (24) est de 3 mm pour 1 mm d'épaisseur de tôle des côtés de cadre (12).

7. Joint à brides selon la revendication 1, caractérisé en ce que l'espace de déformation (122) est à peu près aussi large que la fente longitudinale (91, 92).

8. Joint à brides selon la revendication 1 ou 7, caractérisé en ce que l'espace de déformation (122) a sensiblement la forme d'une poire.

9. Joint à brides selon la revendication 8. caractérisé en ce que l'espace de déformation (122) est de forme circulaire au moins au-delà des 180° intérieurs.

10. Joint à brides selon la revendication 1, caractérisé en ce que la zone de l'espace de déformation (122), immédiatement voisine de la ligne de jonction (126) est à une distance de cette ligne de jonction des deux angles d'arret (81, 82).

11. Joint à brides selon la revendication 10, caractérisé en ce que la distance est d'au moins 1 mm.

12. Joint à brides selon la revendication 11, caractérisé en ce que la distance est entre 1 et 4 mm.

13. Joint à brides selon la revendication 10, caractérisé en ce que la distance correspond au moins à une épaisseur de tôle.

14. Joint à brides selon la revendication 1, caractérisé en ce que l'espace de déformation est une ramification d'extrémité en forme de V (128, 129) de la fente longitudinale, qui définit entre elle-même une pointe de charrue (130).

15. Joint à brides selon la revendication 14, caractérisé en ce que les branches (128, 129) de la ramification d'extrémité sont plus étroites que la fente longitudinale.

16. Joint à brides selon la revendication 1, caractérisé en ce que les extrémités des côtés (72, 73) de la cornière d'angle (63) sont coupées sensiblement parallèlement à la bissectrice (68) de la cornière d'angle.

17. Joint à brides selon la revendication 1, caractérisé en ce que la plaque médiane se transforme, de manière plane, en coté de la cornière d'angle.

18. Joint à brides selon la revendication 1, caractérisé en ce que la plaque médiane est courbée dans la zone d'angle externe (135) avec une bordure étroite (136) à partir du plan de la plaque médiane.

19. Joint à brides selon la revendication 18, caractérisé en ce que la bordure (136) se prolonge aux bords externes (133, 134) de la plaque médiane jusqu'à la base des côtés.

20. Joint à brides selon la revendication 1, caractérisé en ce que dans les côtés (72,73) de la cornière d'angle (63) au moins dans la zone de rétrécissement aucun trou n'est prévu.

21. Joint à brides selon la revendication 1, caractérisé en ce que les deux côtés (72, 73) de la cornière d'angle (63) sont de même largeur.

22. Joint à brides selon la revendication 1, caractérisé en ce que le bourrelet (24) est courbé depuis la bordure radiale externe (14).

23. Joint à brides selon la revendication 22, caractérisé en ce qu'à partir de la bordure radiale externe (14) vers l'extérieur, il est prévu à distance l'un de l'autre deux premiers coudes (26, 27) suivis de deux secondes courbures (31, 32) qui emmènent le bourrelet (24) dans la cavité (38, 39) en formant alors les parois de bourrelet (33, 34) en passant le long des premières courbures (26, 27) et en ce que le bourrelet présente, avant la bordure radiale interne (13), une troisième courbure (36) en forme de U.

24. Joint à brides selon la revendication 23, caractérisé en ce que les premières courbures (26, 27) se continuent dans les secondes courbures (31, 32) par l'intermédiai-re de courtes bandes de paroi (28, 29).

25. Joint à brides selon la revendication 23, caractérisé en ce qu'entre les bandes de paroi (28, 29) et les parois de bourrelet (33, 34) il y a une distance.

26. Joint à brides selon la revendication 23, caractérisé en ce que les premières courbures (26, 27) s'étendent sur environ 90 , les secondes courbures (31. 32) et la troisième courbure (36) sur environ 180°.

27. Joint à brides selon l'une des revendications 23 à 26, caractérisé en ce que toutes les courbures (26, 27, 31, 32, 36) sont le plus rondes possible.

28. Joint à brides selon la revendication 1, caractérisé en ce que le bourrelet (41) est courbé depuis la bordure radiale interne (42).

29. Joint à brides selon la revendication 28, caractérisé en ce que depuis la bordure radiale interne (42) vers l'intérieur il est prévu à distance l'une de l'autre deux quatrièmes courbures (43, 44) qui orientent le bourrelet (41) dans la cavité (56, 57) et en ce que le bourrelet présente dans la zone de la bordure radiale externe (49) une cinquième courbure (48) en forme de U.

30. Joint à brides selon la revendication 29, caractérisé en ce que la cinquième courbure (48) s'engage dans une gorge (51) cambrée vers l'extérieur de la bordure radiale externe (49).

31. Joint à brides selon la revendication 30, caractérisé en ce que la cinquième courbure (48) ne touche pas les parois latérales (53, 54) de la gorge (51), mais prend appui contre les parois latérales (53, 54) en cas de déviations latérales trop importantes.
